# EUROPEAN PATENT APPLICATION

(11) **EP 2 554 474 A1**
(43) Date of publication of application: **06.02.2013**
(21) Application number: 11382272.0
(22) Date of filing: 05.08.2011
(51) Int. Cl.: B64C 25/58

(54) **Shock absorbers**

(71) Applicant: EADS Construcciones Aeronauticas, S.A., 28022 Madrid (ES)
(72) Inventor: Martinez Elkington, Manuel, 28906 Getafe, Madrid (ES)
(74) Representative: Elzaburu Marquez, Alberto

(57) **Abstract**

Adjusting device (1) for an aircraft landing gear shock absorber (2), such that the length (3) of said shock absorber (2) can be varied to change the aircraft attitude for operations on ground, wherein the adjusting device (1) is directly connected to a shock absorber (2) by a supply line (16), the adjusting device (1) comprising an actuating element (13) that moves in a chamber (17) filled with a fluid (20), the actuating element (13) being displaced by means of a drive shaft (12) driven by a driving device (11), the displacement of the actuating element (13) in the chamber (17) causing the addition or removal of fluid (20) in the shock absorber (2), therefore varying the length (3) of said shock absorber (2). The invention also refers to an aircraft landing gear comprising such an adjusting device (1).

## Description

### FIELD OF THE INVENTION

The present invention relates to an adjusting device for shock absorbers, especially for shock absorbers in aircraft landing gears.

### BACKGROUND

Shock absorbers are an important part of aircraft landing gears. A shock absorber is a mechanical device designed to smooth out or damp shock impulses, dissipating the kinetic energy coming from said impulses during ground operations.

Shock absorbers commonly take the form of a cylinder with a sliding piston inside, the cylinder being filled with a hydraulic fluid and gas. These olepneumatic shock absorbers have the highest efficiency of all shock absorber types.

When an aircraft is purposely built as a cargo aircraft, a especially dedicated system is usually designed and implemented such that this system allows the variation of the shock absorber length in order to provide the mentioned cargo aircraft with the necessary adaptation for adjusting the height of the cargo floor in order to ease the loading/unloading of cargo.

Therefore, the known shock absorbers in the state of the art comprise an actuator directly connected to the shock absorber or even embedded in the shock absorber.

Some solutions in the state of the art use the same kind of fluid, typically the same kind of oil, for the two different functions, l.e., for the absorbing function and for the length adjusting function, in order to avoid the fluids being mixed. However, the main problem of such a system is that the functionalities of both fluids are not equal, and the properties and operation of the fluids are therefore not optimized.

For example, document DE 10 2004016341 B3 discloses a shock absorber for aircraft comprising a chamber filled with air and another chamber filled with absorbing oil, used to absorb energy, both chambers being separated. The mentioned shock absorber is connected through a relief valve to an actuator comprising two pistons, such that the space between the two pistons is filled with the absorbing oil, whereas the rest of the space in the actuator is filled with hydraulic oil, which is typically the same as that of the aircraft. One possible command of the relief valve is that the two pistons are to come closer one to another, therefore moving in the same direction but in opposite sense, reducing the volume of the absorbing oil kept between them, which enters the shock absorber, which is therefore extended. Another possibility of command effected by the relief valve is that the two pistons are to separate one from the other, the volume of absorbing oil between them increases, and the length in the shock absorber is thus reduced, by compressing the hydraulic oil, which is therefore used as a length adjusting system in the actuator. This system therefore provides adaptation in the length of the shock absorber so that it can perform loading and unloading operations.

The main problem of such a system is that, in the external actuator system, at each side of the pistons acting in the chamber of it, there is a fluid of a different kind and of different characteristics: while the absorbing oil is filling the space between the pistons, the hydraulic oil is the fluid present in the spaces outside the space between the pistons. Therefore, when the pistons move inside the actuator, the two fluids are in the end mixed, also due to the adherence in the surfaces of the pistons.

Another solution to the mentioned problem is that used in document DE 10 2004016341 B3 in which a sealing system comprising at least two elastomeric joints with double surface is used, this system presenting the disadvantages of higher weight, volume, cost and complexity. Therefore, the main disadvantage of such a system is that, when it has to be implemented on an existing aircraft, its adaptation requires major system and structural modifications. It would then be desirable to provide a quick and simple solution that does not imply any major system nor structural modifications to be performed.

Another problem in the systems in the known prior art is that the piston in the actuator stops in two different positions, which are both limited final positions. For the system to provide intermediate stops, the piston should be able to adjust its stopping at adjusted intermediate positions. In order to obtain this, the system of document DE 10 2004016341 B3, comprises a relief valve that can close and interrupt the flow of fluid between the actuator and the shock absorber, in order to fix a position in the piston in the shock absorber. However, in case of failure of this valve, the piston would displace from this fixed position: for this reason, the relief valve in the system in DE 10 2004016341 B3 is a double valve, which again presents the disadvantages of higher weight, volume, cost and complexity.

The present invention proposes a suitable solution to the above-mentioned disadvantages.

### SUMMARY OF THE INVENTION

The present invention proposes an adjusting device for shock absorbers, especially for shock absorbers in aircraft landing gears, such that the length of said shock absorbers can be varied to change the aircraft attitude when on ground, typically for loading and unloading operations on ground.

The adjusting device of the proposed invention comprises an actuator directly connected to an aircraft shock absorber, typically to an hydraulic chamber in the aircraft shock absorber comprising a fluid, the actuator comprising an actuating element, typically a piston, that moves in a chamber filled with a fluid of the same type as the fluid in the hydraulic chamber in the aircraft shock absorber: the movement of the piston in the actuator causes the variation of the volume in the fluid contained in the actuator chamber, therefore causing the addition or removal of fluid in the shock absorber, which varies the length of said shock absorber. In this way, the shock absorber length is adjusted in order to be able to place the aircraft at the desired ground attitude (typically, loading and unloading operations). The piston in the actuator is moved by means of a drive shaft, the drive shaft being driven itself by a driving device. The drive shaft of the invention is able to adjust the position of the piston in the actuator, and thus the amount of fluid transferred from the actuator to the shock absorber, therefore being the length in the shock absorber controlled.

Moreover, the adjusting device of the invention, operating by means of the drive shaft, is able to stop the piston in the actuator at intermediate positions, allowing the shock absorber to stop at different intermediate positions if desired, without the need of any additional locking devices. The drive shaft of the invention acts as a secondary safety device in the system, avoiding non-commanded movements of the piston in the actuator due to pressure variations originated in the shock absorber. The primary safety device in the system comprises a non-return valve located in the shock absorber.

The adjusting device of the invention can be implemented on virtually any existing aircraft fitted with oleo-pneumatic shock absorbers which separate the gas and the oil by means of a separator element, typically a piston, and can be used both for lengthening or shortening the landing gear of said aircraft without incurring in major system or structural modifications. On the contrary, the existing aircraft landing gears currently fitted with adjusting mechanisms, are based on mechanical or hydraulic systems that are defined as an integral part of the aircraft from the beginning of the aircraft design.

Other features and advantages of the present invention will be understood from the following detailed description in relation with the enclosed drawings.

### BRIEF DESCRIPTION OF DRAWINGS

Figure 1 shows a detailed view of the adjusting device for shock absorbers according to the present invention.
Figures 2a and 2b show the operation of the adjusting device for shock absorbers according to the present invention, when the shock absorbers are under static load.

### DETAILED DESCRIPTION OF PREFERRED EMBODIMENTS

According to a preferred embodiment of the invention, it is described an adjusting device 1 for shock absorbers 2, especially for shock absorbers 2 in aircraft landing gears, such that the length 3 of said shock absorbers 2 can be varied to change the aircraft attitude as required, typically for loading and unloading operations on ground.

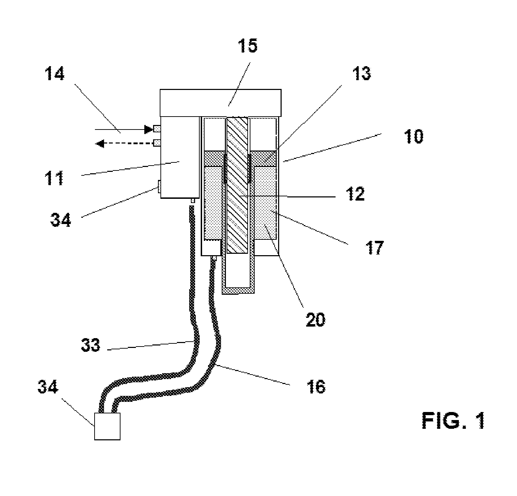

The adjusting device 1 of the invention (see Figure 1) comprises an actuator 10 directly connected to an aircraft shock absorber 2 by means of a supply line 16 and a pilot line 33, in particular connected to a chamber 27 of the shock absorber 2. The actuator 10 comprises an actuating element 13, typically a piston, that moves in a chamber 17 filled with a fluid 20, typically oil, the piston 13 being displaced by means of a drive shaft 12 which is actuated by a driving device 11 via a drive chain 15, preferably a gearbox. The drive shaft 12 is preferably a turning drive shaft, and the driving device 11 is an electric motor, a hydraulic motor or a pneumatic motor. If the driving device 11 is driven by a liquid, this liquid is preferably the same liquid, typically oil, used in the rest of aircraft systems, which enters and exists the driving device 11 through the port 14 (see Figure 1).

When the driving device 11 is actuated, the drive shaft 12 is turned and the piston 13 is displaced in the chamber 17. This causes the addition or removal of fluid 20 in the shock absorber 2, therefore varying the length 3 of said shock absorber 2. In this way, the shock absorber length 3 is adjusted in order to be able to place the aircraft at the desired attitude on ground.

For safety reasons, the shock absorber 2 comprises a non-return valve 34 preventing the possibility that, if the supply line 16 is broken, the shock absorber 2 functionality remains intact.

The non-return valve 34 must therefore be opened and closed every time fluid 20 is put into the shock absorber 2 or removed from it. The non-return valve 34 must therefore be piloted through a pilot line 33 to open in order to allow fluid 20 to flow through it.

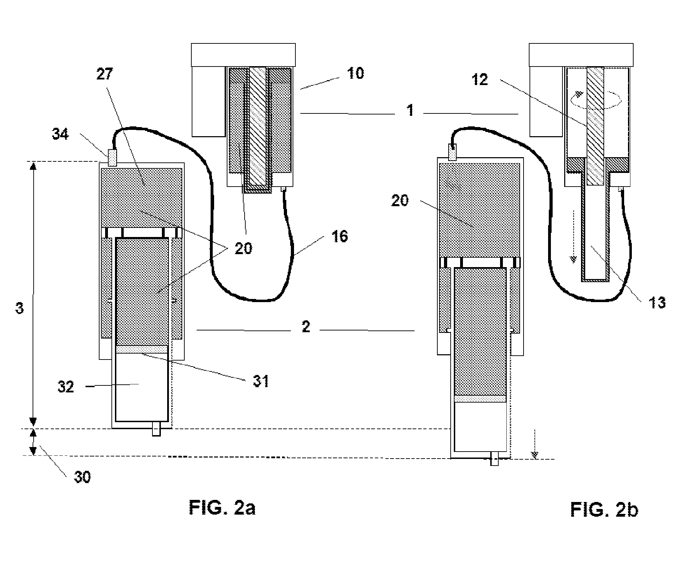

Because of this non-return valve 34 in the shock absorber 2, the shock absorber 2 can stop not only at the terminal positions shown in Figures 2a and 2b, but in different intermediate positions, if required. Sensors and/or timers may be used to control such operations.

Figures 2a and 2b show the operation of the adjusting device 1 when the shock absorber 2 to which it is connected is subjected to static load coming from the weight of an aircraft on ground. When the aircraft is in static conditions on the ground, the shock absorber 2 is compressed due to the aircraft weight (see Figure 2a). The length 3 of the shock absorber 2 is thus reduced, having a stroke loss 30. The adjusting device 1 of the invention, in this static load case, injects fluid 20 into the chamber 27 of the shock absorber 2, as shown in Figure 2b, so that the shock absorber 2 recovers its full length, thus recovering the stroke loss 30. The fluid 20 is injected into the chamber 27 until the complete length 3 is reached in the shock absorber 2.

One of the advantages of the adjusting device 1 of the invention is that it is designed as an independent single piece system that can be fitted to any existing aircraft without main structural modifications, as the adjusting device 1 is powered by an already-existing aircraft power system.

The adjusting device 1 according to the invention does not generate high attachment loads, other than those generated by its own weight, so a simple attachment to the structure where it is fitted in the aircraft is necessary.

The power source from the aircraft feeding the adjusting device 1 through the port 14 according to the invention, and moving the motor 11, can be hydraulic, electric or pneumatic. The operation of the fluid 20 in the adjusting device 1 can either expand or compress the shock absorber 2.

The driving device 11 can be made to turn in different senses, therefore making the drive shaft 12 also turn in different senses, making the piston 13 descend or ascend, and thus increasing or decreasing the volume inside the chamber 17 in the adjusting device 1, which therefore makes the volume inside the chamber 27 in the shock absorber 2 also increase or decrease, consequently.

According to the invention, the shock absorber 2 can be stopped at certain positions desired, by means of timers or sensors (not shown) connected to the driving device (11) on the actuator 10 in the adjusting device 1.

Although the present invention has been fully described in connection with preferred embodiments, it is evident that modifications may be introduced within the scope thereof, not considering this as limited by these embodiments, but by the contents of the following claims.

## Claims

1. Adjusting device (1) for an aircraft landing gear shock absorber (2), such that the length (3) of said shock absorber (2) can be varied to change the aircraft attitude for operations on ground, wherein the adjusting device (1) is directly connected to a shock absorber (2) by a supply line (16), the adjusting device (1) comprising an actuating element (13) that moves in a chamber (17) filled with a fluid (20), **characterized in that** the actuating element (13) is displaced by means of a drive shaft (12) driven by a driving device (11), the displacement of the actuating element (13) in the chamber (17) causing the addition or removal of fluid (20) in the shock absorber (2), therefore varying the length (3) of said shock absorber (2).

2. Adjusting device (1) according to claim 1 wherein the shock absorber (2) is a fluid-pneumatic device, the fluid and the gas being separated in the shock absorber (2).

3. Adjusting device (1) according to claim 2 wherein the fluid (20) in the chamber (17) of the adjusting device (2) is the same as the fluid operating the shock absorber (2).

4. Adjusting device (1) according to any of the previous claims further comprising a non-return valve (34) to which the supply line (16) is connected, the non-return valve (34) being connected to the shock absorber (2), and being opened and closed every time fluid (20) is put into the shock absorber (2) or removed from it.

5. Adjusting device (1) according to claim 4 wherein the non-return valve (34) is controlled by a pilot line (33) connected to the driving device (11), allowing the actuating element (13) being stopped at intermediate positions in the adjusting element (1).

6. Adjusting device (1) according to claim 5, further comprising sensor and/or timers to control stopping at intermediate positions.

7. Adjusting device (1) according to any of the previous claims, wherein the driving device (11) is able to turn in different senses, making the actuating element (13) descend or ascend in the chamber (17).

8. Adjusting device (1) according to any of the previous claims, wherein the driving device (11) is an hydraulic system driven by the hydraulic supply of the aircraft.

9. Adjusting device (1) according to claim 8 wherein the hydraulic system comprises oil.

10. Adjusting device (1) according to any of claims 1-7, wherein the driving device (11) is a pneumatic system comprising gas.

11. Adjusting device (1) according to any of claims 1-7, wherein the driving device (11) is an electrical motor.

12. Aircraft landing gear comprising an adjusting device (1) according to any of the previous claims.
